## Europäisches Patentamt

(19) **European Patent Office**

**Office européen des brevets**

(11) Numéro de publication: **0 026 710**
**B1**

(12) **FASCICULE DE BREVET EUROPEEN**

(45) Date de publication du fascicule du brevet:
07.03.84

(21) Numéro de dépôt: 80401372.0

(22) Date de dépôt: 26.09.80

(51) Int. Cl.³: **A 01 G 9/22,** G 02 B 5/26,
A 01 G 9/14

---

(54) **Produit en feuille pour la filtration de l'éclairement dans les serres, son procédé de fabrication et son application.**

---

(30) Priorité: 28.09.79 FR 7924182

(43) Date de publication de la demande:
08.04.81 Bulletin 81/14

(45) Mention de la délivrance du brevet:
07.03.84 Bulletin 84/10

(84) Etats contractants désignés:
**AT BE CH DE GB IT LI LU NL SE**

(56) Documents cités:
**EP - A - 0 008 718**
**CH - A - 423 296**
**CH - A - 612 321**
**DE - A - 2 107 346**
**FR - A - 2 148 568**
**GB - A - 1 441 745**

(73) Titulaire: **Poullain, Marcel Bernard, F-78940 La Queue Lez Yvelines (FR)**

(72) Inventeur: **Thibaut, Toussaint Pierre, Chemin de la Vieille Butte, F-78100 Saint Germain en Laye (FR)**
Inventeur: **Chaintron, Jean Marc, 5 rue de Béconcelle, F-78910 Orgerus (FR)**

(74) Mandataire: **Bonnetat, Christian, Cabinet PROPI Conseils 23 rue de Léningrad, F-75008 Paris (FR)**

---

### Produit en feuille pour la filtration de l'éclairement dans les serres, son procédé de fabrication et son application

La présente invention concerne un produit en feuille pour la filtration de l'éclairement dans les serres, composé d'une couche en un métal tel que l'aluminium insérée entre deux feuilles plastiques transparentes. Elle concerne également un procédé de fabrication de ce produit en feuille et son application à la régulation de la temperature d'une serre.

On sait que les matériaux (verres naturels ou synthétiques) qui sont utilisés pour la réalisation des serres, présentent la propriété de laisser passer, de l'extérieur vers l'intérieur, les rayons infrarouges de courtes longueurs d'ondes émis par le soleil, mais en revanche d'interdire la traversée vers l'extérieur des rayons infrarouges de plus grandes longueurs d'onde réfléchis par le sol de ces serres; c'est ce qu'on appelle l'«effet de serre».

En hiver, à cause de la position du soleil, les rayons solaires qui pénètrent dans une serre sont bénéfiques aux cultures et ne sont pas susceptibles de causer des brûlures aux plantes. Cependant, l'effet de serre est limité, car, la nuit il se produit de grandes pertes thermiques entre les plantes et l'extérieur.

En été, les jours étant plus longs, l'effet de serre est bien meilleur. Cependant, l'intensité du rayonnement global étant très importante, il résulte de l'effet de serre:

— une forte élévation de température à l'intérieur des serres, malgré l'ouverture de vantaux, susceptibles d'occasionner des dégâts aux cultures;

— une très forte élévation de température à l'intérieur des feuilles des plantes. Celles-ci dépensent alors beaucoup d'énergie pour lutter contre cette élévation de température, ce qui interrompt pour le moins la pousse des plantes, mais le plus souvent les brûle. Pour tenter d'éviter ces effets négatifs, on blanchit pour l'été les parois des serres. Cependant, outre le fait que le blanchiment et le nettoyage (à l'entrée de l'hiver) des parois des serres est un travail long, fastidieux et onéreux, un tel blanchiment est relativement peu efficace, de sorte que, à cause des effets négatifs mentionnés ci-dessus, la culture en serre, l'été, est pratiquement impossible à partir du mois de mai, et même pour des pays ou régions ensoleillés, à partir de mars ou avril.

La présente inention a pour objet de remédier à ces inconvenients. Elle concerne un produit qui l'hiver, à l'intérieur d'une serre, permet de retenir les rayons infrarouges de grande longueur d'one, de réfléchir la lumière en direction des plantes (avec une augmentation de luminosité qui peut alors aller jusqu'à 50%) et de réduire les pertes thermiques par conduction. Le produit selon l'invention permet donc d'augmenter le rendement des serres en hiver. De plus, l'été, le produit selon l'invention permet d'abaisser la température à l'intérieur de la serre et à l'intérieur des feuilles, tout en laissant passer suffisamment de lumière pour la photosynthèse. Là encore, le rendement est amélioré et le produit selon l'invention permet des cultures en serre à des périodes de l'été et dans des pays où cela était impossible auparavant.

A cette fin, selon l'invention, le produit en feuille pour la filtration de l'éclairement dans les serres, composé d'une couche en un métal, tel que l'aluminium, insérée entre deux feuilles plastiques transparentes, est caractérisé en ce que la couche métallique comporte des lacunes régulièrement réparties laissant subsister entre elles des zones métalliques dont la surface totale est telle que ledit produit laisse passer par les lacunes 3 un éclairement compris entre environ 1 et 50% de celui qu'il reçoit.

Les zones métallisées peuvent être supportées par une couche de polyester et recouvertes par une couche de polyéthylène, de polyester, de polypropylène, etc..., lesdites zones et couches formant un ensemble indissociable.

On obtient ainsi un produit souple, qui éventuellement peut être rendu solidaire d'un support transparent rigide. On remarquera que par le document FR-A-2 148 568 on connait déjà un élément optique formé d'un substrat de qualité optique sur lequel on dépose une couche discontinue, ou «à dessin», qui est ensuite recouvert d'un matériau de mêmes propriétés optiques que le substrat. Le front d'onde du faisceau de de lumière atteignant l'élément est ainsi divisé. La couche «à dessin» peut-être formée de réflecteurs métalliques, tandis que le substrat ainsi que la couche de revêtement peuvent être transparents. De plus, le document DE-A-2 107 346 décrit un produit en feuille comportant une couche d'aluminium continue métallisée sur une feuille plastique et recouverte d'une autre feuille transparente, destiné à filtrer la lumière, en interceptant notamment les rayons infrarouges.

Selon une particularité de l'invention, afin de favoriser les échanges gazeux entre le dessous et le dessus dudit produit, celui-ci comporte des trous le traversant de part en part. De plus, il peut comporter une couche d'un produit hydrophile sur la face extérieure d'une des feuilles transparentes entre lesquelles est insérée la couche métallique. Le produit hydrophile peut être l'alcool polyvinylique, permettant d'absorber l'humidité (notamment la nuit) pour éviter l'apparition de condensation susceptibles des gouttes qui en tombant sur les plantes y feraient apparaitre des maladies.

Le produit selon l'invention peut être appliqué sur les serres, à l'extérieur de celles-ci, pour lutter contre l'entrée des rayons infrarouges en été. Toutefois, il est préférable de l'utiliser dans les serres afin d'éviter une élévation excessive de la température des tissus végétaux sans pour autant limiter la température d'ambiance des serres. De plus, l'hiver il n'est mis en place que la nuit pour éviter les pertes thermiques.

On peut prévoir sur la métallisation, une couche d'un produit accroissant le pouvoir réflecteur de cette métallisation, par exemple un vernis blanc.

Le produit selon l'invention peut facilement être fabriqué en continu par gravure d'un film métallisé sur une de ses faces.

Les figures du dessin annexé feront bien comprendre comment l'invention peut être réalisée.

Les figures 1 à 5 sont des vues en coupe agrandie de portions d'exemples de réalisation du produit selon l'invention.

La figure 6 illustre en vue de dessus un exemple de réalisation du produit selon l'invention.

La figure 7 illustre un procédé de fabrication d'un exemple de réalisation du produit selon l'invention.

La figure 8 illustre l'application du produit selon l'invention à l'intérieur d'une serre.

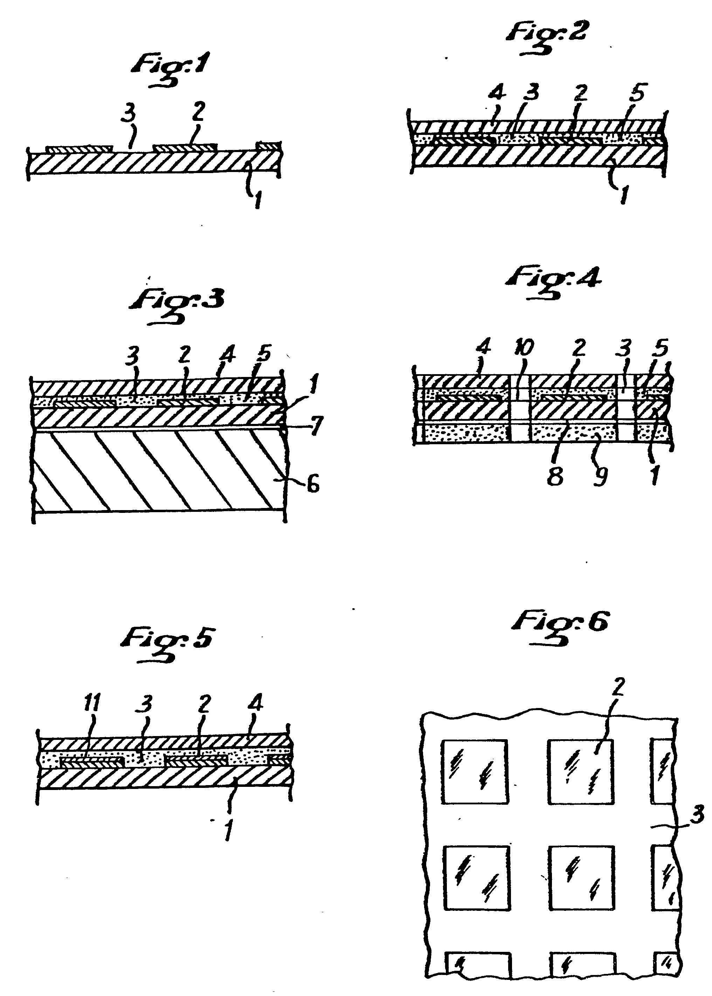

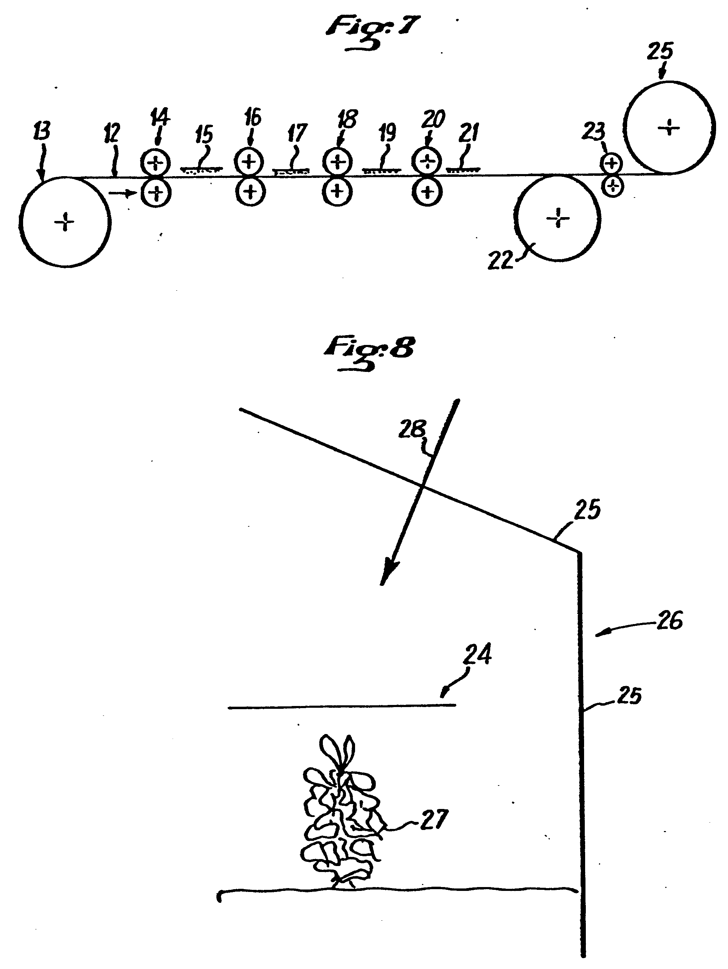

Le produit filtrant selon l'invention, montré par la figure 1, comporte un film de support 1 sur lequel adhérent des zones métallisées 2, laissant subsister entre elles des lacunes 3. Le film de support 1 est transparent à la lumière solaire et il est par exemple constitué par un polyester, un polyamide, un chlorure de polyvinyle ou analogue. Les zones métallisées 2 sont susceptibles de réfléchir les rayons infrarouges solaires et sont par exemple en aluminium. Elles peuvent dessiner tout motif désiré (les carrés représentés sur la figure 6 ne sont qu'un exemple) et leur surface totale est ajustée par rapport à la surface des lacunes 3 en fonction de chaque utilisation désirée. Le rapport de ces surfaces est variable de façon que l'éclairement passant à travers les lacunes 3 soit compris entre 1 et 50% de l'éclairement total reçu.

Dans le mode de réalisation de la figure 2, les zones métallisées sont protégées par un film transparent 4 collé sur l'ensemble 1, 2 au moyen d'une couche adhésive transparente 5. Ainsi, la lumière peut encore passer à travers des lacunes 3 entre les zones métallisées 2. Ce film 4 peut être en polyéthylène, polypropylène, polyamide, chlorure de polyvinyle, plastisol, mousse de polyuréthane, etc.

Sur la figure 3, on a représenté l'exemple de réalisation de la figure 2, collé sur un support rigide transparent 6 (verre, plexiglas, etc...) au moyen d'une couche adhésive transparente 7. Ainsi, le produit souple de la figure 2 peut être utilisé pour former des panneaux rigides.

Dans l'exemple de réalisation de la figure 4, le produit de la figure 2, a été collé, au moyen d'un adhésif 8, sur une couche 9 susceptible d'absorber l'humidité, telle qu'un film hygroscopique d'alcool polyvinylique, de gélatine chromatée. Ce film hygroscopique peut être remplacé par des fibres de fibrane, coton, soie, etc... appliquées par flocage. De plus, des trous 10 ont été prévus à travers l'épaisseur du produit, par exemple dans les lacunes 3.

Le mode de réalisation de la figure 5 est semblable à celui de la figure 2, mais les zones métallisées 2 sont recouvertes du côté opposé au support 1, d'une couche réfléchissante 11.

Le produit des figures 1 à 6 peut être fabriqué de la façon suiante (voir la figure 7).

Un film souple 12, par exemple en polyester, revêtu uniformément sur une des ses faces d'une métallisation d'aluminium est déroulé d'une bobine 13.

Le film 12 passe dans un dispositif d'impression 14, qui dépose un vernis protecteur (éventuellement coloré en blanc pour former la couche 11 de la figure 5) sur la couche d'aluminium, suivant les motifs des zones 2. Ensuite, ce vernis est séché en 15.

Au poste 16, l'aluminium non-protégé par le vernis (à l'emplacement des lacunes 3) est soumis à une attaque chimique par exemple au moyen d'une solution alcoolique de potasse ou de perchlorure de fer, pour être dissous. Le réseau de zones 2 et de lacunes 3 est ainsi crée dans la métallisations d'aluminium.

Le film est séché en 17, en aval du poste de gravure 16, puis lavé en 18 en vue de la débarasser des sels résultant de l'attaque chimique de l'aluminium. Un nouveau séchage est effectué en 19.

Au poste 20, on dépose sur la face d'aluminium du film le produit adhésif 3, qui est séché en 21. Ensuite, le film 4, provenant d'une bobine 22 est appliqué et assemblé au film 12, au poste 23. Le complexe 24 qui en résulte (et qui est semblable au complexe de la figure 2) est ensuite enroulé sur la bobine 25.

La fabrication du produit selon l'invention peut donc se faire en continu. Bien entendu, quoique cela ne soit pas représenté sur la figure 7, ce procédé peut comporter d'autres étapes, comme la perforation des trous 10, l'assemblage avec la couche 9 (figure 4), le flocage d'une matière hygroscopique, etc...

Le complexe 24 obtenu peut être fixé sur les parois 25 d'une serre 26 (voir la figure 8) en vue de protéger les plantes 27. Cependant, l'expérience a montré qu'il étantit souvent avantageux de disposer ce complexe 24, au-dessus desdites plantes.

En été, le complexe 24 est mis en place dans la journée et les rayonnements solidaires 28 traversant alors les parois 25 de la serre 26, atteignent le complexe 24, qui réfléchit les rayons infrarouges tombant sur ces zones métallisées 2 et ne laisse passer que la partie desdits rayonnements 28 atteignant les lacunes 3. Grâce au complexe 24, on diminue à la fois la température de la serre, la température des tissus végétaux et la lumière servant à la photosynthèse. On a constaté que cette diminution du niveau d'éclairement n'altérait en rien la végétation en été et était camparable à celle engendrée par le blanchiment traditionnel des serres.

Si le complexe comporte des trous 10, les échanges gazeux entre le dessus et le dessous du complexe 24 sont libres. Si le complexe 24 comporte une couche hygroscopique 9, celle-ci est avantageusement dirigée vers les plantes 27.

En hiver, le complexe 24 est mis en place la nuit et les rayonnements emmagasinés dans la journée ne peuvent que plus difficilement passer vers l'extérieur. On limite alors les pertes thermiques. Dans ce cas, il est avantageux que le complexe 24 comporte la couche 11 (voir la figure 5) amplifiant le pouvoir réflecteur de l'aluminium et que cette couche 11 soit dirigée vers les plantes 27.

On remarquera que le produit selon l'invention n'agit pas seulement sur la luminosité et la température. En effet, de plus, en supprimant les élévations brutales de température dans les serres, il évite les chutes d'hygrométrie très préjudiciables aux plantes. Il exerce donc une action indirecte sur l'hygrométrie.

Des essais ont montré que les meilleurs résultats du point de vue énergétique étaient obtenus quand l'épaisseur des zones métallisées 2 correspondait au maximum du pouvoir réflecteur de leur matière constitutive et que l'apport de lumière se faisait à travers de petites fenêtres. En effet, dans ce cas, l'échauffement du dispositif selon l'invention est très faible, et une quantité de lumière suffisante traverse celui-ci.

En cas de besoin, des agents anti-ultraviolets peuvent être incorporés au dispositif, par exemple dans le film 4 ou dans l'agent adhésif 5.

## Revendications

1. Produit en feuille pour la filtration de l'éclairement dans les serres, composé d'une couche en un métal tel que l'aluminium insérée entre deux feuilles plastiques transparentes (1 et 4), caractérisé en ce que la couche métallique comporte des lacunes (3) régulièrement réparties laissant subsister entre elles des zones métalliques (2), dont la surface totale est telle que le produit laisse passer par les lacunes (3) un éclairement compris entre environ 1 et 50% de celui qu'il reçoit.

2. Produit en feuille selon la revendication 1, caractérisé en ce qu'il comporte des trous (10) le traversant de part en part.

3. Produit en feuille selon l'une des revendications 1 ou 2, caractérisé en ce qu'il comporte une couche (9) d'un produit hydrophile sur la face extérieure d'une des feuilles transparentes entre lesquelles est insérée la couche métallique, cette couche (9) étant susceptibles de laisser passer les rayonnements.

4. Produit en feuille selon l'une quelconque des revendications 1 à 3, caractérisé en ce que la face desdites zones métalliques (2) dirigée vers l'éclairement incident est recouverte par une couche d'un produit (11) renforçant le pouvoir réfléchissant desdites zones métallisées (2).

5. Produit en feuille selon l'une quelconque des revendications 1 à 4, caractérisé en ce que ledit produit est rendu solidaire, par la face extérieure d'une des feuilles transparentes (1 et 4) entre lesquelles est insérée la couche métallique, d'un panneau rigide transparent (6).

6. Procédé pour l'obtention du produit spécifié sous l'une quelconque des revendications 1 à 5, caractérisé en ce que dans une face entièrement métallisée d'un film transparent (12), destiné à former l'une desdites feuilles plastiques, on grave des zones métallisées (2) de façon à former lesdites lacunes (3) régulièrement réparties, après quoi on applique sur ladite face métallisée et gravée un film transparent de protection, formant l'autre desdites feuilles plastiques (4).

7. Application du produit spécifié sous l'une quelconque des revendications 1 à 5, à la régulation de la température d'une serre, caractérisé en ce que ledit produit est appliqué sur les parois de ladite serre ou à l'intérieur de la serre, au-dessus des plantes.

## Patentansprüche

1. Folie zum Filtern des auf Gewächshäuser auftreffenden Lichtes, bestehend aus einer zwischen zwei transparenten Plastikfolien (1 und 4) eingefügten Schicht aus Metall, wie Aluminium, dadurch gekennzeichnet, dass die Metallschicht regelmässig verteilte Lücken (3) aufweist, zwischen denen Metallzonen (2) bestehen bleiben, deren Gesamtfläche so beschaffen ist, dass zwischen den Lücken (3) eine solche Lichtmenge hindurchgelassen wird, die 1 bis 50% der auftreffenden Lichtmenge entspricht.

2. Folie nach Anspruch 1, gekennzeichnet durch das ganze Erzeugnis durchquerende Löcher (10).

3. Folie nach Anspruch 1 oder 2, gekennzeichnet durch eine Schicht (9) eines hydrophilen Produkts auf der Aussenfläche einer der transparenten Folien (1 bzw. 4), zwischen denen die Metallschicht eingefügt ist, wobei diese Schicht (9) strahlungsdurchlässig ist.

4. Folie nach einem der Ansprüche 1 bis 3, dadurch gekennzeichnet, dass die Fläche der Metallzonen (2), die der einfallenden Beleuchtung zugewendet ist, mit einer Schicht eines Materials (11) überzogen ist, das die Reflexionsfähigkeit der Metallzonen (2) verstärkt.

5. Folie nach einem der Ansprüche 1 bis 4, dadurch gekennzeichnet, dass das Erzeugnis durch die Aussenfläche einer der transparenten Folien (1 und 4), zwischen denen die Metallschicht eingefügt ist, mit einer starren transparenten Tafel (6) verbunden ist.

6. Verfahren zum Herstellen des in den Ansprüchen 1 bis 5 bezeichneten Erzeugnisses, dadurch gekennzeichnet, dass in die vollständig metallisierte Fläche eines transparenten Films (12), die eine der Kunststofffolien bildet, die Metallzonen (2) entsprechend der Form zur Bildung der regelmässig verteilten Löcher (3) graviert werden, wonach auf die metallisierte und gravierte Fläche ein transparenter Schutzfilm aufgebracht wird, der die andere Kunststofffolie (4) bildet.

7. Anwendung des in den Ansprüchen 1 bis 5 bezeichneten Erzeugnisses zur Temperaturregelung eines Treibhauses, dadurch gekennzeichnet, dass das Erzeugnis auf der Wand oder im Innern des Treibhauses oberhalb der Pflanzen zur Anwendung kommt.

## Claims

1. Product in sheet form for the filtration of the illumination in greenhouses, composed of a layer of metal such as aluminiuzm inserted between two transparent plastic sheets (1 and 4), characterized in that the metal layer comprises regularly distributed gaps (3), leaving therebetween metal zones (2), of which the total surface is such that the product allows an illumination of between about 1 and 50% of that which it receives, to pass through the gaps (3).

2. Laminated product according to claim 1, characterized in that it comprises holes (10) passing right through it.

3. Laminated product according to one of claims 1 or 2, characterized in that it comprises a layer (9) of a hydrophilic product on the outer face of one of the transparent sheets between which the metal layer is inserted, this layer (9) being adapted to allow the radiation to pass.

4. Laminated product according to any one of claims 1 to 3, characterized in that the face of said metal zones (2) directed towards the incident illumination is covered by a layer of a product (11) reinforcing the reflecting power of said metallized zones (2).

5. Laminated product according to any one of claims 1 to 4, characterized in that said product is rendered fast, by the outer face of one of the transparent sheets (1 and 4) between which is inserted the metal layer, with a rigid transparent panel (6).

6. Process for obtaining the product specified in any one of claims 1 to 5, characterized in that, in an entirely metallized face of a transparent film (12), adapted to form one of said plastic sheets, are engraved metallized zones (2) so as to form said regularly distributed gaps (3), after which a transparent protective film, forming the other of said plastics sheets (4), is applied on said engraved, metallized face.

7. Application of the product specified in any one of claims 1 to 5, to the regulation of temperature in a greenhouse, characterized in that said product is applied on the walls of said greenhouse or inside the greenhouse, above the plants.

Fig.1

Fig.2

Fig.3

Fig.4

Fig.5

Fig.6

*Fig. 7*

*Fig. 8*